(19) **Europäisches Patentamt / European Patent Office / Office européen des brevets**

(11) **EP 4 311 229 A1**

(12) **EUROPEAN PATENT APPLICATION**
published in accordance with Art. 153(4) EPC

(43) Date of publication:
**24.01.2024 Bulletin 2024/04**

(21) Application number: **22795737.0**

(22) Date of filing: **25.04.2022**

(51) International Patent Classification (IPC):
**H04N 7/18** *(2006.01)*        **B60R 11/02** *(2006.01)*

(52) Cooperative Patent Classification (CPC):
**B60R 11/02; H04N 7/18**

(86) International application number:
**PCT/JP2022/018769**

(87) International publication number:
**WO 2022/230824 (03.11.2022 Gazette 2022/44)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(30) Priority: **28.04.2021 JP 2021075783**

(71) Applicant: **Kyocera Corporation**
**Kyoto-shi Kyoto 612-8501 (JP)**

(72) Inventors:
• **SHINTANI, Takeshi**
  **Kyoto-shi, Kyoto 612-8501 (JP)**
• **SADAMOTO, Hiromichi**
  **Kyoto-shi, Kyoto 612-8501 (JP)**
• **NAKAJIMA, Yasushi**
  **Kyoto-shi, Kyoto 612-8501 (JP)**

(74) Representative: **Viering, Jentschura & Partner mbB**
**Patent- und Rechtsanwälte**
**Am Brauhaus 8**
**01099 Dresden (DE)**

(54) **IMAGE DISPLAY DEVICE AND IMAGE DISPLAY METHOD**

(57) An image display apparatus includes an imager that captures an image of an area adjacent to a vehicle, a gaze point detector that detects a position of a gaze point of an observer seated on a seat of the vehicle, an image display located on an obstructive object obstructing an outside view of the observer, an image data generator that generates, based on captured image data output from the imager, image data of an image corresponding to the outside view of the observer obstructed by the obstructive object, and a display device that causes the image data to be displayed on the image display. The imager changes a resolution of the imager based on the position of the gaze point.

FIG. 1

EP 4 311 229 A1

**Description**

TECHNICAL FIELD

The present disclosure relates to an image display apparatus and an image display method.

BACKGROUND OF INVENTION

A known technique is described in, for example, Patent Literature 1.

CITATION LIST

PATENT LITERATURE

Patent Literature 1: Japanese Unexamined Patent Application Publication No. 2006-44596

SUMMARY

In an aspect of the present disclosure, an image display apparatus includes an imager that captures an image of an area adjacent to a vehicle, a gaze point detector that detects a position of a gaze point of an observer seated on a seat of the vehicle, an image display located on an obstructive object obstructing an outside view of the observer, an image data generator that generates, based on captured image data output from the imager, image data of an image corresponding to the outside view of the observer obstructed by the obstructive object, and a display device that causes the image data to be displayed on the image display. ¥1he imager changes a resolution of the imager based on the position of the gaze point.

In another aspect of the present disclosure, an image display method includes detecting a position of a gaze point of an observer seated on a seat of a vehicle, capturing an image of an area adjacent to the vehicle, generating, based on captured image data obtained in the capturing the image, image data of an image corresponding to an outside view of the observer seated on the seat of the vehicle obstructed by an obstructive object, and displaying the image data on an image display located on the obstructive object. The capturing the image includes changing a resolution of an imager based on the position of the gaze point.

BRIEF DESCRIPTION OF THE DRAWINGS

FIG. 1 is a schematic diagram of an image display apparatus according to one embodiment of the present disclosure.
FIG. 2 is a schematic plan view of a vehicle incorporating the image display apparatus in FIG. 1.
FIG. 3 is a schematic side view of the vehicle incorporating the image display apparatus in FIG. 1.
FIG. 4 is a schematic cross-sectional view of an example retroreflective screen in the image display apparatus in FIG. 1.
FIG. 5 is a schematic diagram illustrating an imaging range of an imager and a projection range of a projector in the image display apparatus in FIG. 1.
FIG. 6 is a diagram illustrating generation and projection of transparent image data performed by the image display apparatus in FIG. 1.
FIG. 7 is a diagram illustrating generation and projection of the transparent image data performed by the image display apparatus in FIG. 1.
FIG. 8 is a diagram illustrating generation and projection of the transparent image data performed by the image display apparatus in FIG. 1.
FIG. 9 is a diagram illustrating generation and projection of the transparent image data performed by the image display apparatus in FIG. 1.
FIG. 10 is a diagram of transparent image data projected on an obstructive object without changing the resolution of the imager in a comparative example.
FIG. 11 is a diagram of transparent image data projected on the obstructive object without changing the resolution of the imager in the comparative example.
FIG. 12 is a schematic plan view of a vehicle incorporating an image display apparatus according to a variation of the embodiment of the present disclosure.
FIG. 13 is a schematic side view of the vehicle incorporating the image display apparatus according to the variation of the embodiment of the present disclosure.

FIG. 14 is a schematic plan view of a vehicle incorporating an image display apparatus according to a variation of another embodiment of the present disclosure.

FIG. 15 is a flowchart of an image display method according to one embodiment of the present disclosure.

DESCRIPTION OF EMBODIMENTS

The objects, features, and advantages of the present disclosure will become more apparent from the following detailed description and the drawings.

Various transparency techniques and various image display apparatuses using such transparency techniques have been recently developed for projecting an outside image captured by a camera onto a retroreflective screen located on an obstructive object obstructing the field of view of an observer and allowing the observer to perceive a transparent image of the outside as viewed through the obstructive object being transparent (refer to, for example, Patent Literature 1).

Such known image display apparatuses may have difficulty in allowing the observer to perceive a transparent image as connecting with outside scenery or to perceive a high-definition transparent image when the position of a gaze point of the observer changes.

An image display apparatus and an image display method according to one or more embodiments of the present disclosure will now be described with reference to the accompanying drawings. The drawings used herein are schematic and are not drawn to scale relative to the actual size of each component. For ease of explanation, each drawing illustrates the orthogonal XYZ coordinate system with X-direction referring to the width direction of a vehicle, Y-direction to the length direction of the vehicle, and Z-direction to the height direction.

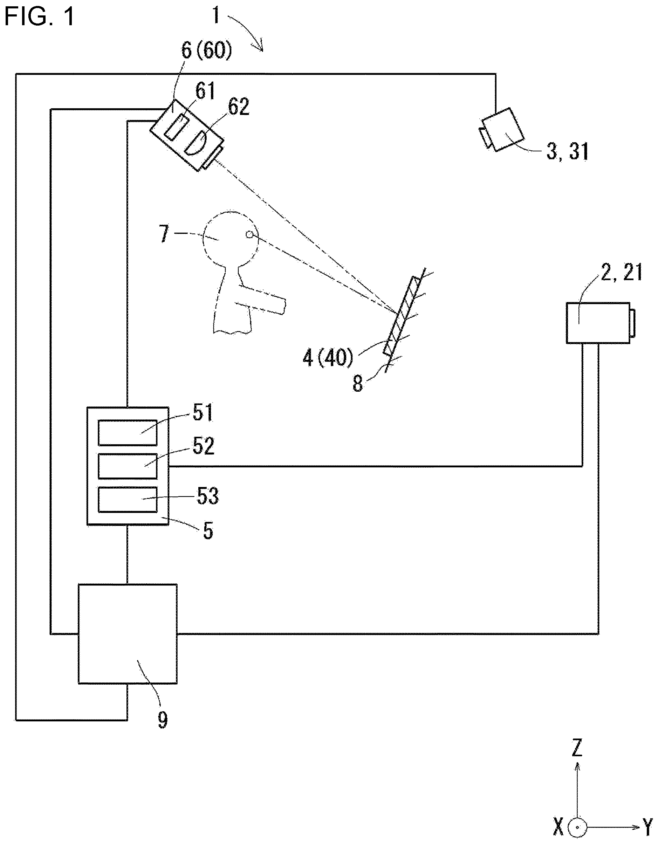

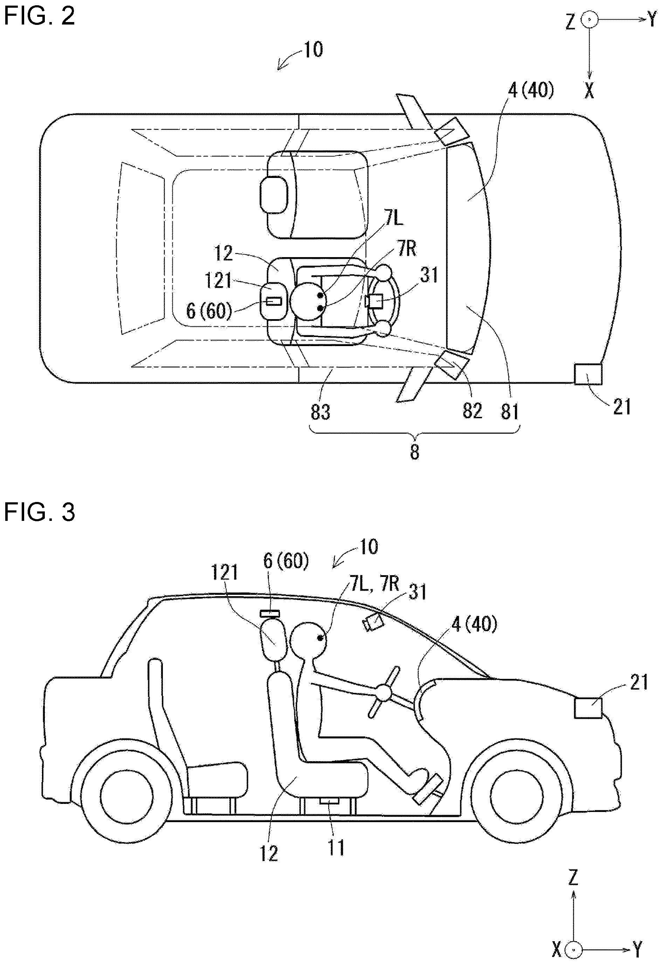

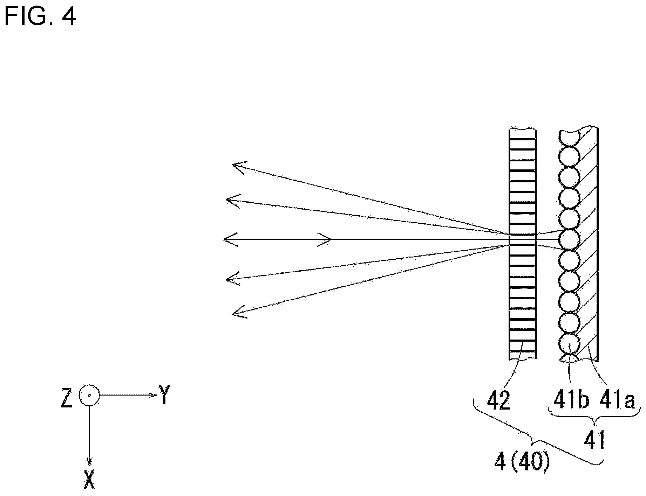

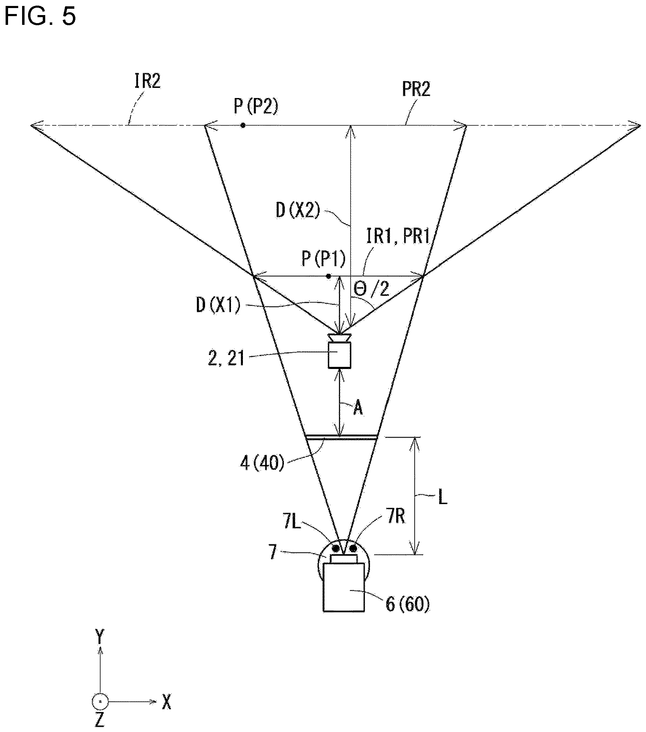

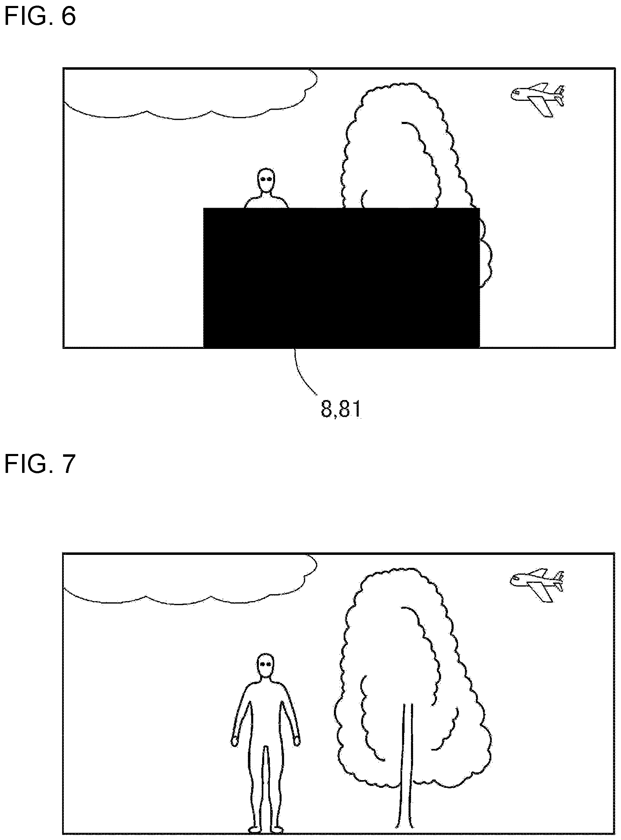

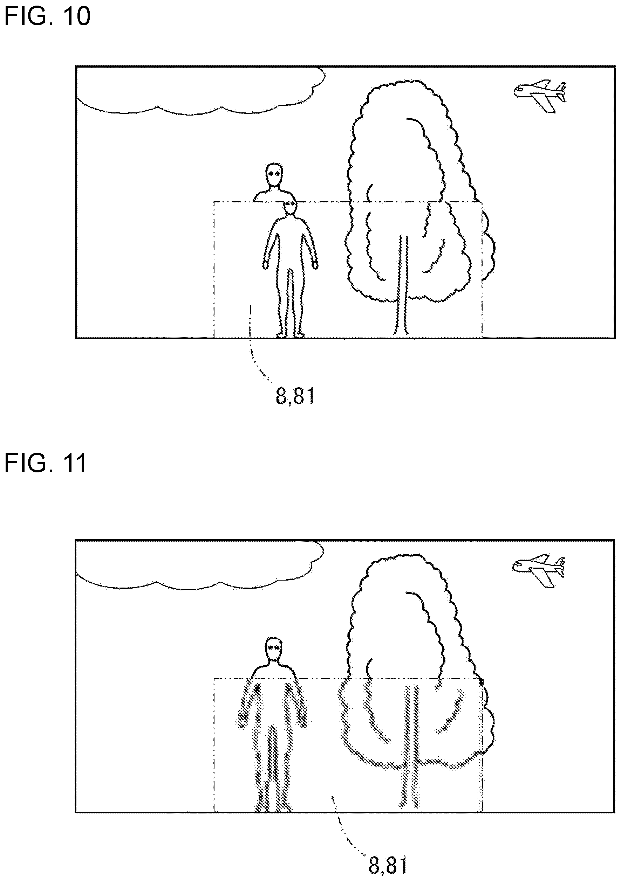

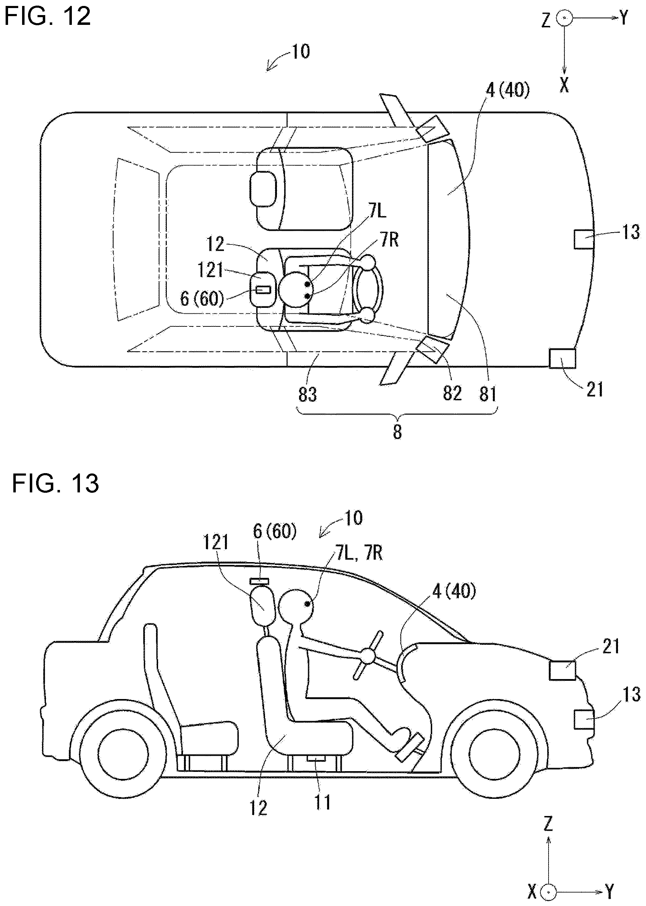

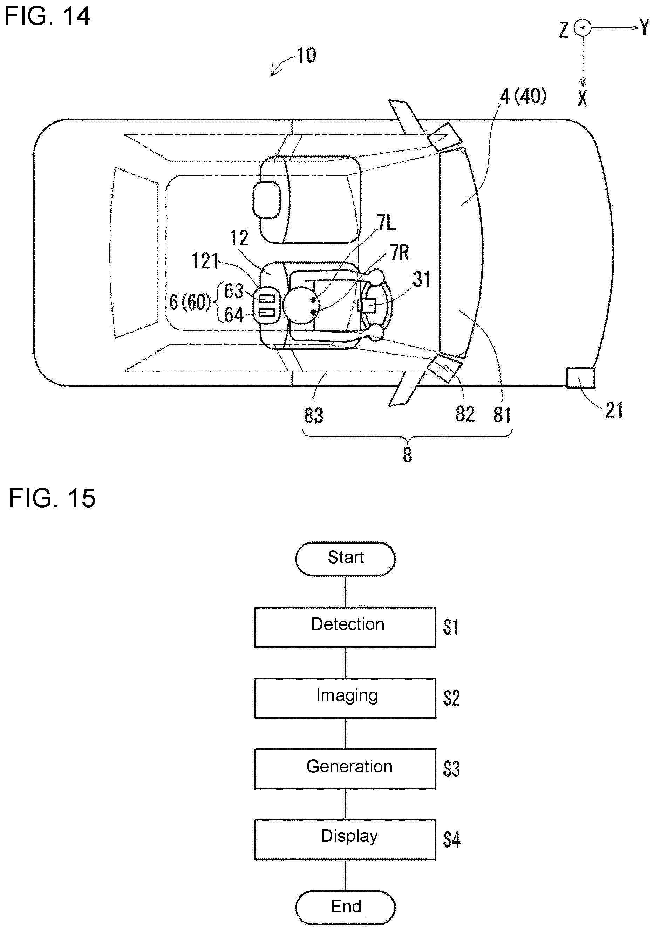

FIG. 1 is a schematic diagram of an image display apparatus according to one embodiment of the present disclosure. FIG. 2 is a schematic plan view of a vehicle incorporating the image display apparatus in FIG. 1. FIG. 3 is a schematic side view of the vehicle incorporating the image display apparatus in FIG. 1. FIG. 4 is a schematic cross-sectional view of an example retroreflective screen in the image display apparatus in FIG. 1. FIG. 5 is a schematic plan view illustrating an imaging range of an imager and a projection range of a projector in the image display apparatus in FIG. 1. FIGs. 6 to 9 are diagrams each illustrating generation and projection of transparent image data performed by the image display apparatus in FIG. 1. FIGs. 10 and 11 are each a diagram of transparent image data projected on an obstructive object without changing the resolution of the imager in a comparative example. FIG. 12 is a schematic plan view of a vehicle incorporating an image display apparatus according to a variation of the embodiment of the present disclosure. FIG. 13 is a schematic side view of the vehicle incorporating the image display apparatus according to the variation of the embodiment of the present disclosure. FIG. 14 is a schematic plan view of a vehicle incorporating an image display apparatus according to another embodiment of the present disclosure. FIG. 15 is a flowchart of an image display method according to one embodiment of the present disclosure.

In the present embodiment, an image display apparatus 1 includes an imager 2, a gaze point detector 3, an image display 4, an image data generator 5, and a display device 6 (refer to FIG. 1).

The image display apparatus 1 is incorporated in a vehicle 10 as illustrated in, for example, FIGs. 2 and 3. FIGs. 2 and 3 illustrate the vehicle 10 that is a passenger vehicle. In some embodiments, the vehicle 10 may not be a passenger vehicle and may be an automobile such as a truck, a bus, a motorcycle, or a trolley bus. The vehicle 10 may not be an automobile and may be a railroad vehicle, an industrial vehicle, a community vehicle, or a fixed-wing aircraft that travels on a runway.

The image display apparatus 1 includes a controller 9. The controller 9 is connected to the components of the image display apparatus 1 to control these components. The controller 9 is implemented by a processor such as an electronic control unit (ECU) as a hardware resource and by a computer-readable program as a software resource. The controller 9 may include one or more processors. The processors may include a general-purpose processor that reads a specific program and performs a specific function, and a processor dedicated to specific processing. The dedicated processor may include an application-specific integrated circuit (ASIC). The processors may include a programmable logic device (PLD). The PLD may include a field-programmable gate array (FPGA). The controller 9 may be either a system on a chip (SoC) or a system in a package (SiP) in which one or more processors cooperate with other components. The controller 9 may include a storage and store, into the storage, various items of information or programs to operate each component of the image display apparatus 1. The storage may be, for example, a semiconductor memory. The storage may serve as a storage area temporarily used during the data processing performed by the controller 9.

The imager 2 captures an image of the scenery adjacent to the vehicle 10. The imager 2 outputs captured image data (also referred to as image data) resulting from such image capturing to the image data generator 5. The imager 2 includes an exterior camera 21. The exterior camera 21 may be located on a front end of the vehicle 10 as illustrated in, for example, FIGs. 2 and 3. The exterior camera 21 may also be located inside the cabin or inside the engine compartment in the vehicle 10. The exterior camera 21 includes multiple image sensors. The image sensors may be, for example, charge-coupled device (CCD) image sensors or complementary metal-oxide semiconductor (CMOS) image sensors. The exterior camera 21 may include a lens with a wide angle of view, such as a wide-angle lens or a fisheye lens.

The imager 2 can change its resolution (more specifically, the resolution of an image captured by the exterior camera 21). The imager 2 may change the resolution based on a control signal output from the controller 9. The resolution of the imager 2 may be changed by increasing or decreasing, of the multiple image sensors, the number of image sensors that receive light of an image of scenery. The resolution of the imager 2 may be changed by increasing or decreasing, of the multiple image sensors, the number of image sensors that output light reception signals.

The vehicle 10 includes obstructive objects 8 that partially obstruct the outside view of an observer 7 seated on a seat 12 of the vehicle 10. Examples of the obstructive objects 8 include a dashboard 81, side pillars 82, and doors 83. The exterior camera 21 captures an image of scenery adjacent to the vehicle 10 that is not obstructed by the obstructive objects 8 and perceivable by the observer 7 and scenery adjacent to the vehicle 10 that is obstructed by the obstructive objects 8 and imperceivable by the observer 7. In the example described below, the dashboard 81 is an obstructive object 8. The seat 12 on which the observer 7 is seated may be the driver's seat of the vehicle 10. The observer 7 may be the driver of the vehicle 10. The observer 7 is hereafter also referred to as a driver 7. The seat 12 is hereafter also referred to as a driver's seat 12.

The gaze point detector 3 detects a gaze point P of the observer 7 seated on the seat 12 of the vehicle 10. The gaze point P is a point in the three-dimensional space at which the observer 7 gazes. The gaze point P may be a point at which the line of sight of a left eye (also referred to as a first eye) 7L of the observer 7 intersects with the line of sight of a right eye (also referred to as a second eye) 7R of the observer 7. The line of sight is a straight line connecting the center of a pupil of the observer 7 and the center of the corneal curvature of the observer 7. The lines of sight are detectable based on, for example, captured image data of images of the left eye 7L and the right eye 7R captured by a camera. The left eye 7L and the right eye 7R may be hereafter simply and collectively referred to as eyes 7L and 7R without being distinguished from each other. The gaze point P may be, for example, a position of an object that attracts attention of the observer 7. The gaze point P may be a position of an object at the shortest distance from the vehicle 10 or a position of an object at the longest distance from the vehicle 10.

The gaze point detector 3 includes an interior camera 31. The interior camera 31 captures an image of the face of the observer 7, in particular, the left eye 7L and the right eye 7R of the observer 7.

The interior camera 31 may be located on the ceiling of the cabin in the vehicle 10 as illustrated in, for example, FIGs. 2 and 3. The interior camera 31 may be located on the dashboard 81 or on one of the side pillars 82. The interior camera 31 may be integral with a room mirror. The interior camera 31 includes multiple image sensors. The image sensors may be, for example, CCD image sensors or CMOS image sensors. The interior camera 31 may be a visible light camera or an infrared camera. Multiple interior cameras 31 may be located at different positions in the cabin.

The gaze point detector 3 performs an arithmetic operation on captured image data including the coordinates of the eyes 7L and 7R of the observer 7 output from the interior camera 31 and detects the gaze point P of the observer 7. The gaze point detector 3 outputs the coordinates of the detected gaze point P to the image data generator 5 and to the controller 9. The controller 9 may generate a control signal for changing the resolution of the exterior camera 21 based on the coordinates of the gaze point P output from the gaze point detector 3 and output the generated control signal to the imager 2.

The gaze point detector 3 may detect the X-coordinate, the Y-coordinate, and the Z-coordinate of the gaze point P in the three-dimensional space. In some embodiments, the Z-coordinate of the gaze point P is estimated to be substantially the same as the Z-coordinate of the position of a headrest 121 of the seat 12 at which the eyes 7L and 7R of the observer 7 are estimated to be located. Thus, the gaze point detector 3 may detect the X-coordinate and the Y-coordinate alone of the gaze point P in a plane that is perpendicular to the height direction (Z-direction) and includes the headrest 121 of the seat 12. This can reduce a processing load of the gaze point detector 3. A transparent image to be perceived by the observer 7 can thus be processed at higher speed, allowing the observer 7 to perceive a natural transparent image.

The image display 4 is located on the surface of the obstructive object 8 facing the observer 7 seated on the seat 12 of the vehicle 10. The display device 6 causes image data to be displayed on the image display 4. The image display 4 may be a screen such as a retroreflective screen or a diffuse reflection screen. The image display 4 is not limited to a screen. The image display 4 may include an image display device such as a liquid crystal display device, an organic electroluminescent (EL) display device, or a micro-light-emitting diode (μLED) display device. The image display 4 is hereafter a retroreflective screen 40. The display device 6 being a projector projects image data onto the retroreflective screen 40. The retroreflective screen 40 is retroreflective and reflects all the incident light to travel in a direction reverse to the direction in which the light enters. The retroreflective screen 40 may include, for example, microbeads or corner cubes.

The retroreflective screen 40 including microbeads includes a retroreflector 41. The retroreflector 41 includes a reflective film 41a and multiple glass beads 41b attached to the reflective film 41a. The reflective film 41a may contain metal materials such as aluminum (Al), silver (Ag), gold (Au), chromium (Cr), nickel (Ni), platinum (Pt), or tin (Sn). The glass beads 41b may have a diameter of, for example, about 20 to 100 μm inclusive.

Incident light entering the retroreflective screen 40 is refracted at the front surface of each glass bead 41b opposite to the reflective film 41a, reaches the back surface of the glass bead 41b on the reflective film 41a, and is reflected from the reflective film 41a. The light reflected from the reflective film 41a is again refracted at the back surface of the glass bead 41b and travels along a light path separate from the light path of the incident light by a small distance less than or equal to the diameter of the glass bead 41b and parallel to the light path of the incident light. In this manner, the retroreflection is performed by the retroreflective screen 40.

The retroreflective screen 40 may include a diffuser 42. The diffuser 42 is located between the retroreflector 41 and the display device 6 that is a projector. The diffuser 42 is located proximate to the retroreflector 41. The diffuser 42 may diffuse light flux of image light emitted from an exit pupil in the display device 6. The diffuser 42 may be, for example, a diffractive element.

With the retroreflective screen 40 without including the diffuser 42, image light projected by the projector is retroreflected from the retroreflective screen 40 and travels toward the projector. The observer 7 may thus perceive the transparent image with lower luminance. With the retroreflective screen 40 including the diffuser 42, image light retroreflected from the retroreflective screen 40 can enter the eyes 7L and 7R of the observer 7. The observer 7 can thus perceive the transparent image with higher luminance.

The diffuser 42 may be anisotropic and have a difference in a diffusion capability between the width direction of the vehicle (X-direction) and the height direction (Z-direction). The anisotropic diffuser may have a diffusion capability settable based on, for example, the estimated positions of the eyes 7L and 7R of the observer 7 (e.g., the position of the headrest 121 of the seat 12) and the position of the display device 6 that is a projector. This allows image light retroreflected from the retroreflective screen 40 to effectively enter the eyes 7L and 7R of the observer 7, thus allowing the observer 7 to perceive a clear transparent image.

The image data generator 5 generates, based on image data about the scenery adjacent to the vehicle 10 output from the imager 2, image data of an image (also referred to as a transparent image) corresponding to the outside view of the observer 7 that is obstructed by the obstructive object 8.

The image data generator 5 includes an outside-image memory 51 storing image data about the scenery adjacent to the vehicle 10, a transparent image memory 52 storing image data (also referred to as transparent image data) to be projected on the retroreflective screen 40, and a processor 53 implementable by, for example, a processor.

Image data of images captured by the exterior camera 21 is stored and updated in the outside-image memory 51. The image data stored and updated in the outside-image memory 51 includes a range corresponding to an outside view of the observer 7 that is obstructed by the obstructive object 8.

The processor 53 reads the image data stored in the outside-image memory 51 and generates, based on the image data, transparent image data of an image corresponding to the outside view of the observer 7 that is obstructed by the obstructive object 8. To generate the transparent image data, the processor 53 performs an arithmetic operation based on the position and the shape of the obstructive object 8. The transparent image memory 52 stores the image data generated by the processor 53. The image data generator 5 outputs the image data stored in the transparent image memory 52 to the display device 6.

The image data generator 5 cuts (extracts) a portion of the image data output from the imager 2 and generates the transparent image data based on the cut (extracted) image data. The transparent image data generated by the image data generator 5 may be a portion of the image data output from the imager 2. The image data generator 5 may correct, based on, for example, the positional relationship between the positions of the eyes 7L and 7R and the position of the gaze point P as well as the shape of the obstructive object 8, the cut image data to deform the transparent image. This allows the observer 7 to perceive a less distorted transparent image as connecting with the outside scenery when the obstructive object 8 includes a curved surface on which the retroreflective screen 40 is located.

The image data generator 5 may include an illuminance sensor (not illustrated) that detects the illuminance inside the cabin. The image data generator 5 may adjust luminance information about the image data based on the illuminance obtained from the illuminance sensor. This allows the observer 7 to perceive a clear transparent image corresponding to the illuminance inside the cabin.

The display device 6 causes image data generated by the image data generator 5 to be displayed on the image display 4. When the image display 4 is the retroreflective screen 40, the display device 6 is a projector 60. The projector 60 projects the image data generated by the image data generator 5 on the retroreflective screen 40. The projector 60 includes a display panel 61 and a projection lens 62. The projection lens 62 may be located to have its exit pupil adjacent to the eyes 7L and 7R of the observer 7. When a screen of an image display device such as a liquid crystal display device is used as the image display 4, the image display device includes the display device 6. This eliminates the projector 60.

The display panel 61 displays image data generated by the image data generator 5. The display panel 61 may be a transmissive display panel or a self-luminous display panel. The transmissive display panel may be a liquid crystal display panel including transmissive liquid crystal display elements and a backlight. The self-luminous display panel may include self-luminous light emitters such as light-emitting diodes, organic light-emitting diodes, or semiconductor laser diodes. Image light emitted from the display surface of the display panel 61 is projected through the projection lens 62 onto the retroreflective screen 40. The projection lens 62 may be a single lens or a combination of multiple lenses.

The image light of the transparent image data projected onto the retroreflective screen 40 by the projector 60 is retroreflected from the retroreflective screen 40 and enters the eyes 7L and 7R of the observer 7. This allows the observer 7 to perceive the transparent image as connecting with the outside scenery.

In the image display apparatus 1, the controller 9 may control the resolution of the imager 2 based on the position of the gaze point P detected by the gaze point detector 3. The controller 9 may change the resolution of the imager 2 based on a distance D between the vehicle 10 and the gaze point P. The distance D between the vehicle 10 and the gaze point P may be a distance between the exterior camera 21 and the gaze point P. The distance D between the exterior camera 21 and the gaze point P may be a distance between the exterior camera 21 and the gaze point P in the length direction of the vehicle (Y-direction) as viewed in the height direction (Z-direction). In other words, the distance D may be a distance between the exterior camera 21 and the gaze point P in the length direction of the vehicle (Y-direction) in an XY plane.

Generation of a transparent image performed by the image display apparatus 1 will now be described. FIG. 5 illustrates the mutual positional relationship between the gaze point P of the observer 7, the exterior camera 21, and the projector 60 as viewed in the height direction (Z-direction). The image display apparatus 1 has a constant distance L between the projector 60 and the retroreflective screen 40 and a constant distance A between the retroreflective screen 40 and the imager 2 (exterior camera 21). In FIG. 5, the distance D between the exterior camera 21 and the gaze point P is X1 or X2 (X2 > X1). The distance D, the distance L, and the distance A are in the length direction of the vehicle (Y-direction) in an XY plane. The image display apparatus 1 has a constant angle of view $\Theta$ of the exterior camera 21 and a constant throw ratio S of the projector 60. An imaging range IR of the imager 2 and a projection range PR of the projector 60 are areas in a ZX plane.

With the gaze point P at position P1, or more specifically, with the distance D between the exterior camera 21 and the gaze point P being a predetermined distance X1, the image display apparatus 1 has an imaging range IR1 of the imager 2 aligned with a projection range PR1 of the projector 60. This satisfies Formula 1 below. With the distance D between the exterior camera 21 and the gaze point P being X1, the image display apparatus 1 may have the resolution of the imager 2 matching the resolution of the projector 60.

$$L + A + X1{:}L = X1 \times \tan(\Theta/2){:}(L/2S) \qquad (1)$$

With the distance D between the exterior camera 21 and the gaze point P being X1, the projection range PR1 has a width $W_{PR}$ in the width direction of the vehicle (X-direction) expressed by Formula 2 below, and the imaging range IR1 has a width $W_{IR}$ in the width direction of the vehicle (X-direction) expressed by Formula 3 below.

$$W_{PR} = (L + A + X1)/S \qquad (2)$$

$$W_{IR} = 2 \times X1 \times \tan(\Theta/2) \qquad (3)$$

With the distance D between the exterior camera 21 and the gaze point P being X1, Formula 1 holds, and thus $W_{PR} = W_{IR}$. With the projection range PR and the imaging range IR1 aligned with each other, image data output from the imager 2 is projected onto the retroreflective screen 40, allowing the observer 7 to perceive a high-definition transparent image as connecting with the outside scenery.

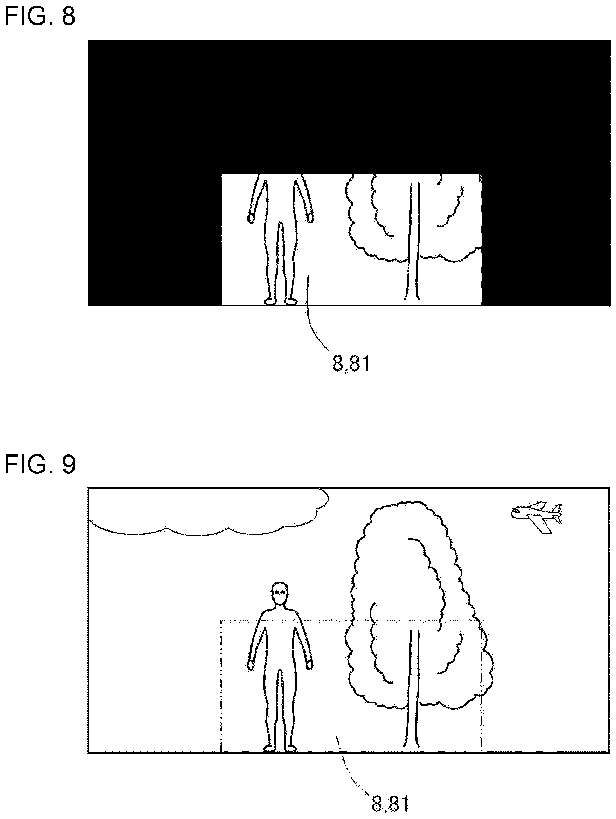

Generation and projection of transparent image data with the distance D between the exterior camera 21 and the gaze point P being X1 will now be described with reference to FIGs. 6 to 9. FIG. 6 illustrates the outside view of the observer 7 seated on a seat of the vehicle 10. The image display apparatus 1 in FIG. 6 is not in operation. In this state, the obstructive object 8 (dashboard 81) partially obstructs the outside view of the observer 7. FIG. 7 illustrates scenery image captured by the imager 2. The image data generator 5 cuts a portion of the captured image data output from the imager 2 as illustrated in FIG. 8 to generate transparent image data to be projected onto the retroreflective screen 40. The image data generator 5 may generate the transparent image data to be projected onto the retroreflective screen 40 based on, for example, the difference between the outside view of the observer 7 with the image display apparatus 1 not in operation (refer to FIG. 6) and the scenery image captured by the imager 2 (refer to FIG. 7). The projector 60 projects the image data generated by the image data generator 5 on the retroreflective screen 40. This allows the observer 7 to perceive the transparent image as connecting with the outside scenery as illustrated in, for example, FIG. 9.

With the gaze point P being at position P2, or more specifically, with the distance D between the exterior camera 21 and the gaze point P being a distance X2 (> X1), the projection range PR2 has a width $W_{PR}$ in the width direction of the vehicle (X-direction) expressed by Formula 4 below, and the imaging range IR2 has a width $W_{IR}$ in the width direction of the vehicle (X-direction) expressed by Formula 5 below.

$$W_{PR} = (L + A + X2)/S \qquad\qquad (4)$$

$$W_{IR} = 2 \times X2 \times \tan(\Theta/2) \qquad\qquad (5)$$

With the distance D between the exterior camera 21 and the gaze point P being X2, the imaging range IR2 of the imager 2 is larger than the projection range PR2 of the projector 60. When a portion of image data output from the imager 2 is cut and projected onto the retroreflective screen 40 in the same or similar manner as when the distance D between the exterior camera 21 and the gaze point P is X1, the observer 7 cannot perceive the transparent image as connecting with the outside scenery (refer to FIG. 10). When a smaller portion is cut from the image data output from the imager 2, the observer 7 can perceive a transparent image as connecting with the outside scenery. However, the transparent image generated in this manner has a lower resolution than the projector 60, or for example, has the resolution of the projector 60 multiplied by $(W_{PR}/W_{IR})^2$. Thus, the observer 7 cannot perceive a high-definition transparent image (refer to FIG. 11). When the resolution of the imager 2 is constantly set high, the observer 7 can perceive a high-definition transparent image as connecting with the outside scenery. However, the resolution of the imager 2 constantly set high increases the processing load of the image data generator 5. This causes the observer 7 to be less likely to perceive a transparent image updated in real time and increases the power consumption of the image display apparatus 1.

In the present embodiment, the image display apparatus 1 changes the resolution of the imager 2 based on the position of the gaze point P of the observer 7. With the imaging range of the imager 2 aligned with the projection range of the projector 60, the image display apparatus 1 allows the observer 7 to perceive a high-definition transparent image as connecting with the outside scenery as illustrated in FIG. 9. With the imaging range of the imager 2 larger than the projection range of the projector 60, the image display apparatus 1 changes the resolution of the exterior camera 21 and cuts, from the image data output from the imager 2, a range smaller than the range that is cut when the imaging range of the imager 2 is aligned with the projection range of the projector 60. In this manner, with the imaging range of the imager 2 being larger than the projection range of the projector 60, the image display apparatus 1 allows the observer 7 to perceive a high-definition transparent image as connecting with the outside scenery in the same or similar manner as when the imaging range of the imager 2 is aligned with the projection range of the projector 60.

The image display apparatus 1 may have a higher resolution of the imager 2 for a longer distance D between the imager 2 (exterior camera 21) and the gaze point P. With the distance D between the exterior camera 21 and the gaze point P being $k \times X1$ (k is a real number greater than or equal to 1), the image display apparatus 1 may set the resolution of the exterior camera 21 to be k times the resolution of the projector 60. In this manner, with the distance D between the exterior camera 21 and the gaze point P different from the distance X1, the image display apparatus 1 can change the resolution of the exterior camera 21 based on the distance D to cause the resolution of the imaging range IR corresponding to the projection range PR of the projector 60 to match or substantially match the resolution of the projector 60. The image display apparatus 1 thus allows the observer 7 to perceive a high-definition transparent image as connecting with the outside scenery when the position of the gaze point P of the observer 7 is changed.

The image display apparatus 1 may dynamically change the resolution of the imager 2 based on the distance D between the imager 2 (exterior camera 21) and the gaze point P. This allows the resolution of the imager 2 to be optimized based on the distance D between the imager 2 (exterior camera 21) and the gaze point P, reducing the processing load of the image display apparatus 1. A transparent image to be perceived by the observer 7 can thus be processed at higher speed, allowing the observer 7 to perceive a natural transparent image. This can also reduce an increase in the power consumption of the image display apparatus 1.

As illustrated in, for example, FIG. 3, the image display apparatus 1 may include a seating sensor 11. The seating sensor 11 is located on the driver's seat 12 of the vehicle 10 and detects the driver 7 being seated. The seating sensor 11 may be a known sensor such as a load sensor or a limit switch. In response to detecting the driver 7 being seated on the driver's seat 12, the seating sensor 11 outputs a detection signal to the controller 9. In response to the detection signal input from the seating sensor 11, the controller 9 causes the gaze point detector 3 to start detecting the gaze point P of the driver 7, and then causes the imager 2, the image data generator 5, and the projector 60 to start operating. This eliminates a switching operation performed by the driver 7 to cause the image display apparatus 1 to start operating, thus improving the convenience of the driver 7.

The image display apparatus 1 may include no gaze point detector 3. As illustrated in, for example, FIGs. 12 and 13, the image display apparatus 1 including no gaze point detector 3 may include a ranging unit 13. The ranging unit 13 may include, for example, a light detection and ranging (LiDAR), a millimeter wave radar, an ultrasonic sensor, or a stereo camera. The ranging unit 13 may be located at, for example, a front end of the vehicle 10. The ranging unit 13 detects a relative position and a relative velocity of a target object located adjacent to the vehicle 10 with respect to the vehicle 10. The target object may be an object that attracts the attention of the observer 7 among objects located adjacent to the vehicle 10. The target object may be an object at the shortest distance from the vehicle 10 or an object at the longest distance from the vehicle 10. The image display apparatus 1 may change the resolution of the imager 2 based on the position of the target object. The image display apparatus 1 including the ranging unit 13 in place of the gaze point detector 3 allows the observer 7 to perceive a high-definition transparent image as connecting with the outside scenery. The image display apparatus 1 may change the resolution of the imager 2 based on the distance D1 between the vehicle 10 and a target object measured by the ranging unit 13. The distance D1 between the vehicle 10 and the target object may be a distance between the exterior camera 21 and the target object in the length direction of the vehicle (Y-direction) as viewed in the height direction (Z-direction). The image display apparatus 1 may have a higher resolution of the imager 2 for a longer distance D1.

The image display apparatus 1 may allow the observer 7 to perceive a transparent image that is a three-dimensional image (refer to FIG. 14).

The imager 2 may capture an image of outside scenery and output first captured image data and second captured image data having parallax between them. The first captured image data and the second captured image data may have parallax corresponding to the eyes 7L and 7R of the observer 7. The exterior camera 21 may be, for example, a stereo camera or a monocular camera. When the exterior camera 21 is a monocular camera, the imager 2 may perform an arithmetic operation on a single piece of captured image data and generate the first captured image data and the second captured image data having parallax between them.

The image data generator 5 generates image data of a first image to be perceived by the left eye (first eye) 7L of the observer 7 based on the first captured image data output from the imager 2. The image data generator 5 generates image data of a second image to be perceived by the right eye (second eye) 7R of the observer 7 based on the second captured image data output from the imager 2. The first image and the second image have parallax between them.

As illustrated in, for example, FIG. 14, the projector 60 includes a first projector 63 and a second projector 64. The first projector 63 projects the image data of the first image generated by the image data generator 5 onto the retroreflective screen 40. The second projector 64 projects the image data of the second image generated by the image data generator 5 onto the retroreflective screen 40. The first projector 63 and the second projector 64 may be located proximate to the headrest 121 of the seat 12. The first projector 63 may be located to have its exit pupil adjacent to the left eye 7L of the observer 7. The second projector 64 may be located to have its exit pupil adjacent to the right eye 7R of the observer 7.

The image display apparatus 1 illustrated in FIG. 14 allows the observer 7 to stereoscopically perceive a high-definition transparent image as connecting with the outside scenery. The image display apparatus 1 may change the resolution of the imager 2 based on the position of the gaze point P of the observer 7. The image display apparatus 1 may change the resolution of the imager 2 based on the distance D between the vehicle 10 and the gaze point P. The image display apparatus 1 may have a higher resolution of the imager 2 for a longer distance D.

An image display method according to one embodiment of the present disclosure will now be described. FIG. 15 is a flowchart of the image display method according to the present embodiment. The controller 9 performs the processing in the flowchart. The controller 9 may start the processing in the flowchart in response to a detection signal input from the seating sensor 11. The controller 9 repeatedly performs the processing in the flowchart during the operation of the image display apparatus 1.

In the present embodiment, the image display method includes detection S 1, imaging S2, generation S3, and display S4.

The detection S1 includes detecting the position of the gaze point P of the observer 7 seated on the seat 12 of the vehicle 10. The controller 9 controls the gaze point detector 3 to cause the interior camera 31 to capture an image of the eyes 7L and 7R of the observer 7 and to detect the gaze point P of the observer 7 based on the captured image data about the eyes 7L and 7R.

The imaging S2 includes capturing an image of scenery adjacent to the vehicle 10 with the imager 2. The controller 9 controls the imager 2 to change the resolution based on the position of the gaze point P detected in the detection S 1 and then to capture an image of the scenery adjacent to the vehicle 10. The controller 9 controls the imager 2 to change the resolution to cause the resolution of the imaging range IR of the imager 2 corresponding to the projection range PR of the projector 60 to match or substantially match the resolution of the projector 60. The controller 9 may have a higher resolution of the imager 2 for a longer distance D between the vehicle 10 and the gaze point P.

The generation S3 includes generating, based on the captured image data obtained in the imaging S2, image data (transparent image data) of an image corresponding to an outside view of the observer 7 seated on the seat 12 of the vehicle 10 and obstructed by the obstructive object 8. The controller 9 controls the image data generator 5 to generate the transparent image data based on the captured image data obtained in the imaging S2. The controller 9 may control the image data generator 5 to cut a portion of the captured image data obtained in the imaging S2 and generate the transparent image data based on the cut captured image data.

The display S4 includes displaying the image data generated in the generation S3 on the image display 4 located on the obstructive object 8. The controller 9 controls the display device 6 to cause the transparent image data generated in the generation S3 to be displayed on the image display 4 and ends the processing in the flowchart. When the image display 4 is the retroreflective screen 40 and the display device 6 is the projector 60, the controller 9 controls the projector 60 to project the transparent image data onto the retroreflective screen 40.

In the present embodiment, the image display method allows the observer 7 to perceive a high-definition transparent image as connecting with the outside scenery when the position of the gaze point P of the observer 7 is changed.

The present disclosure may be implemented in the following forms.

In one or more embodiments of the present disclosure, an image display apparatus includes an imager that captures an image of an area adjacent to a vehicle, a gaze point detector that detects a position of a gaze point of an observer seated on a seat of the vehicle, an image display located on an obstructive object obstructing an outside view of the observer, an image data generator that generates, based on captured image data output from the imager, image data of an image corresponding to the outside view of the observer obstructed by the obstructive object, and a display device that causes the image data to be displayed on the image display. The imager changes a resolution of the imager based on the position of the gaze point.

In one or more embodiments of the present disclosure, an image display method includes detecting a position of a gaze point of an observer seated on a seat of a vehicle, capturing an image of an area adjacent to the vehicle, generating, based on captured image data obtained in the capturing the image, image data of an image corresponding to an outside view of the observer seated on the seat of the vehicle obstructed by an obstructive object, and displaying the image data on an image display located on the obstructive object. The capturing the image includes changing a resolution of an imager based on the position of the gaze point.

In the embodiments of the present disclosure, the image display apparatus and the image display method allow the observer to perceive a high-definition transparent image as connecting with the outside scenery when the position of the gaze point of the observer is changed.

Although the embodiments of the present disclosure have been described in detail, the present disclosure is not limited to the embodiments described above, and may be changed or varied in various manners without departing from the spirit and scope of the present disclosure. The components described in the above embodiments may be entirely or partially combined as appropriate unless any contradiction arises.

REFERENCE SIGNS

| | |
|---|---|
| 1 | image display apparatus |
| 2 | imager |
| 21 | exterior camera |
| 3 | gaze point detector |
| 31 | interior camera |
| 4 | image display |
| 40 | retroreflective screen |
| 41 | retroreflector |
| 41a | reflective film |
| 41b | glass bead |
| 42 | diffuser |
| 5 | image data generator |
| 51 | outside-image memory |
| 52 | transparent image memory |
| 53 | processor |
| 6 | display device |
| 60 | projector |
| 61 | display panel |
| 62 | projection lens |
| 63 | first projector |
| 64 | second projector |
| 7 | observer (driver) |
| 7L | left eye |

| 7R | right eye |
| 8 | obstructive object |
| 81 | dashboard |
| 82 | side pillar |
| 83 | door |
| 9 | controller |
| 10 | vehicle |
| 11 | seating sensor |
| 12 | seat (driver's seat) |
| 121 | headrest |
| 13 | ranging unit |

**Claims**

1. An image display apparatus, comprising:

an imager configured to capture an image of an area adjacent to a vehicle;
a gaze point detector configured to detect a position of a gaze point of an observer seated on a seat of the vehicle;
an image display located on an obstructive object obstructing an outside view of the observer;
an image data generator configured to generate, based on captured image data output from the imager, image data of an image corresponding to the outside view of the observer obstructed by the obstructive object; and
a display device configured to cause the image data to be displayed on the image display,
wherein the imager changes a resolution of the imager based on the position of the gaze point.

2. The image display apparatus according to claim 1, wherein
the imager has a higher resolution for a longer distance between the vehicle and the gaze point.

3. The image display apparatus according to claim 1 or claim 2, wherein
the image data generator cuts a portion of the captured image data and generates the image data based on the cut captured image data.

4. The image display apparatus according to any one of claims 1 to 3, wherein

the image display includes a retroreflective screen, and
the display device includes a projector configured to project the image data on the retroreflective screen.

5. The image display apparatus according to claim 4, wherein
the retroreflective screen includes a retroreflector located on a surface of the obstructive object facing the observer and a diffuser located proximate to the retroreflector between the retroreflector and the projector.

6. The image display apparatus according to claim 1 or claim 2, wherein

the image data generator generates, based on the captured image data, image data of a first image to be perceived by a first eye of the observer and image data of a second image to be perceived by a second eye of the observer, and the second image has parallax with the first image, and
the projector projects the image data of the first image and the image data of the second image onto the retroreflective screen.

7. The image display apparatus according to any one of claims 1 to 6, wherein
the obstructive object includes at least a dashboard, a side pillar, or a door of the vehicle.

8. An image display method, comprising:

detecting a position of a gaze point of an observer seated on a seat of a vehicle;
capturing an image of an area adjacent to the vehicle;
generating, based on captured image data obtained in the capturing the image, image data of an image corresponding to an outside view of the observer seated on the seat of the vehicle, the outside view being obstructed by an obstructive object; and

displaying the image data on an image display located on the obstructive object,

wherein the capturing the image includes changing a resolution of an imager based on the position of the gaze point.

9. The image display method according to claim 8, wherein
the capturing the image includes having a higher resolution of the imager for a longer distance between the vehicle and the gaze point.

10. The image display method according to claim 8 or claim 9, wherein
the generating the image data includes cutting a portion of the captured image data and generating the image data based on the cut captured image data.

FIG. 1

FIG. 2

FIG. 3

FIG. 4

FIG. 5

FIG. 6

8,81

FIG. 7

EP 4 311 229 A1

FIG. 8

8,81

FIG. 9

8,81

17

FIG. 10

8,81

FIG. 11

8,81

FIG. 12

Z ⊙ →Y
↓
X

10

4 (40)

13

7L

7R

12

121

6 (60)

83    82    81

8

21

FIG. 13

10

121    6 (60)

7L, 7R

4 (40)

21

13

12    11

Z
↑
X ⊙ →Y

FIG. 14

Z ⊙ →Y
X

FIG. 15

```
        ┌──────────┐
        │  Start   │
        └──────────┘
              │
     ┌─────────────────┐
     │   Detection     │ S1
     └─────────────────┘
              │
     ┌─────────────────┐
     │    Imaging      │ S2
     └─────────────────┘
              │
     ┌─────────────────┐
     │   Generation    │ S3
     └─────────────────┘
              │
     ┌─────────────────┐
     │    Display      │ S4
     └─────────────────┘
              │
        ┌──────────┐
        │   End    │
        └──────────┘
```

## INTERNATIONAL SEARCH REPORT

| International application No. |
| --- |
| **PCT/JP2022/018769** |

**A.    CLASSIFICATION OF SUBJECT MATTER**

*H04N 7/18*(2006.01)i; *B60R 11/02*(2006.01)i
FI:    H04N7/18 J; B60R11/02 C

According to International Patent Classification (IPC) or to both national classification and IPC

**B.    FIELDS SEARCHED**

Minimum documentation searched (classification system followed by classification symbols)

H04N7/18; B60R11/02

Documentation searched other than minimum documentation to the extent that such documents are included in the fields searched

Published examined utility model applications of Japan 1922-1996
Published unexamined utility model applications of Japan 1971-2022
Registered utility model specifications of Japan 1996-2022
Published registered utility model applications of Japan 1994-2022

Electronic data base consulted during the international search (name of data base and, where practicable, search terms used)

**C.    DOCUMENTS CONSIDERED TO BE RELEVANT**

| Category* | Citation of document, with indication, where appropriate, of the relevant passages | Relevant to claim No. |
| --- | --- | --- |
| Y | JP 2014-534697 A (CONTINENTAL AUTOMOTIVE SYSTEMS, INC.) 18 December 2014 (2014-12-18)<br>   paragraphs [0001]-[0020], fig. 1-5 | 1, 3-8, 10 |
| A | entire text, all drawings | 2, 9 |
| Y | JP 2008-137595 A (AISIN AW CO., LTD.) 19 June 2008 (2008-06-19)<br>   paragraphs [0011]-[0042], fig. 1-9 | 1, 3-8, 10 |
| A | entire text, all drawings | 2, 9 |
| Y | JP 2019-134202 A (SONY SEMICONDUCTOR SOLUTIONS CORP.) 08 August 2019 (2019-08-08)<br>   paragraphs [0018]-[0100], fig. 1-18 | 1, 3-8, 10 |
| A | entire text, all drawings | 2, 9 |
| Y | WO 2014/076993 A1 (NEC CORP.) 22 May 2014 (2014-05-22)<br>   paragraphs [0019]-[0034], fig. 1-3 | 4-7 |
| A | entire text, all drawings | 2, 9 |

☑ Further documents are listed in the continuation of Box C.      ☑ See patent family annex.

*    Special categories of cited documents:
"A"   document defining the general state of the art which is not considered to be of particular relevance
"E"   earlier application or patent but published on or after the international filing date
"L"   document which may throw doubts on priority claim(s) or which is cited to establish the publication date of another citation or other special reason (as specified)
"O"   document referring to an oral disclosure, use, exhibition or other means
"P"   document published prior to the international filing date but later than the priority date claimed

"T"   later document published after the international filing date or priority date and not in conflict with the application but cited to understand the principle or theory underlying the invention
"X"   document of particular relevance; the claimed invention cannot be considered novel or cannot be considered to involve an inventive step when the document is taken alone
"Y"   document of particular relevance; the claimed invention cannot be considered to involve an inventive step when the document is combined with one or more other such documents, such combination being obvious to a person skilled in the art
"&"   document member of the same patent family

| Date of the actual completion of the international search | Date of mailing of the international search report |
| --- | --- |
| **05 July 2022** | **12 July 2022** |

| Name and mailing address of the ISA/JP | Authorized officer |
| --- | --- |
| **Japan Patent Office (ISA/JP)**<br>**3-4-3 Kasumigaseki, Chiyoda-ku, Tokyo 100-8915**<br>**Japan** | |
| Telephone No. | |

Form PCT/ISA/210 (second sheet) (January 2015)

**INTERNATIONAL SEARCH REPORT**

International application No.

**PCT/JP2022/018769**

## C. DOCUMENTS CONSIDERED TO BE RELEVANT

| Category* | Citation of document, with indication, where appropriate, of the relevant passages | Relevant to claim No. |
|-----------|-----------------------------------------------------------------------------------|----------------------|
| Y | WO 2019/035177 A1 (MITSUBISHI ELECTRIC CORP.) 21 February 2019 (2019-02-21) paragraphs [0011]-[0028], fig. 1-6 | 6-7 |
| A | entire text, all drawings | 2, 9 |
| Y | JP 2009-6893 A (AISIN AW CO., LTD.) 15 January 2009 (2009-01-15) paragraph [0058], fig. 8 | 7 |
| A | entire text, all drawings | 2, 9 |

## INTERNATIONAL SEARCH REPORT
### Information on patent family members

International application No.

**PCT/JP2022/018769**

| Patent document cited in search report | | | Publication date (day/month/year) | Patent family member(s) | | | Publication date (day/month/year) |
|---|---|---|---|---|---|---|---|
| JP | 2014-534697 | A | 18 December 2014 | US | 2013/0096820 | A1 | |
| | | | | paragraphs [0001]-[0024], fig. 1-5 | | | |
| | | | | WO | 2013/055513 | A1 | |
| | | | | EP | 2766223 | A1 | |
| | | | | CN | 103987578 | A | |
| JP | 2008-137595 | A | 19 June 2008 | (Family: none) | | | |
| JP | 2019-134202 | A | 08 August 2019 | US | 2021/0067722 | A1 | |
| | | | | paragraphs [0034]-[0135], fig. 1-18 | | | |
| | | | | WO | 2019/146178 | A1 | |
| | | | | CN | 111527741 | A | |
| WO | 2014/076993 | A1 | 22 May 2014 | (Family: none) | | | |
| WO | 2019/035177 | A1 | 21 February 2019 | (Family: none) | | | |
| JP | 2009-6893 | A | 15 January 2009 | (Family: none) | | | |

Form PCT/ISA/210 (patent family annex) (January 2015)

**EP 4 311 229 A1**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2006044596 A